# EUROPÄISCHE PATENTSCHRIFT

(11) **EP 1 645 133 B1**
(45) Veröffentlichungstag und Bekanntmachung des Hinweises auf die Patenterteilung: **15.08.2012**
(21) Anmeldenummer: 04741947.8
(22) Anmeldetag: 02.07.2004
(51) Int. Cl.: G06F 17/30, H04N 7/24

(54) **VERFAHREN ZUR CODIERUNG VON STRUKTURIERTEN DOKUMENTEN**
METHOD FOR CODING STRUCTURED DOCUMENTS
PROCEDE DE CODAGE DE DOCUMENTS STRUCTURES

(30) Priorität: 15.07.2003 DE 10332054; 06.11.2003 DE 10351897
(43) Veröffentlichungstag der Anmeldung: 12.04.2006
(73) Patentinhaber: Prasendt Investments LLC, Wilmington, DE 19808 (US)
(72) Erfinder: HUTTER, Andreas, 81673 München (DE); HEUER, Jörg, 82041 Oberhaching (DE)
(74) Vertreter: Small, Gary James
(86) Internationale Anmeldenummer: PCT/EP2004/051333
(87) Internationale Veröffentlichungsnummer: WO 2005/008520

(56) Entgegenhaltungen:
- EP-A- 1 158 420
- WO-A-02/063775
- WO-A-03/001811
- "TEXT OF ISO/IEC FCD 15938-1 INFORMATION TECHNOLOGY - MULTIMEDIA CONTENT DESCRIPTION INTERFACE - PART 1 SYSTEMS" ISO/IEC JTC1/SC29/WG11 MPEG01/N4001, XX, XX, März 2001 (2001-03), Seiten 1-2,I, XP001001465
- "TEXT OF ISO/IEC 15938-1/PDAM1" ISO/IEC JTC1/SC29/WG11 MPEG/N5486, XX, XX, Dezember 2002 (2002-12), Seiten A-B,IV, XP001131062
- PETER LEDERER ET AL: "Results of CE on Specification consistency - Item c - Schema Transmission Framework", JOINT VIDEO TEAM (JVT) OF ISO/IEC MPEG & ITU-T VCEG(ISO/IEC JTC1/SC29/WG11 AND ITU-T SG16 Q6), XX, XX, no. M9889, 16 July 2003 (2003-07-16), XP030038780,
- "TEXT OF ISO/IEC 15938-1/PDAM1 (extract)", ISO/IEC JTC1/SC29/WG11 MPEG/N5486, XX, XX, 1 December 2002 (2002-12-01), pages 50-51,

## Beschreibung

Die Erfindung betrifft ein Verfahren und eine Vorrichtung, mit denen ein strukturiertes, insbesondere XML-basierten Dokument mit Hilfe von sog. Schemas codiert und/oder decodiert wird.

XML (= extensible markup language) ist eine Sprache, mit der eine strukturierte Beschreibung der Inhalte eines Dokuments mittels XML-Schema-Sprachdefinitionen ermöglicht wird. Eine genauere Beschreibung des XML-Schemas sowie der darin verwendeten Strukturen, Datentypen und Inhaltsmodelle findet sich in den Referenzen [1], [2] und [3].

Verfahren, Vorrichtungen oder Systeme zur Codierung bzw. Decodierung von XML-basierten Dokument sind aus Schriften zum MPEG-7-Standard, insbesondere aus dem Dokument [4] bekannt.

Bekannte Verfahren zur binären Repräsentation von MPEG-7 und anderen XML-basierten Beschreibungen oder Dokumenten weisen Defizite hinsichtlich der Kompatibilität auf, sofern die Schemas der zu codierenden XML-basierten Beschreibungen oder Dokumente zu Beginn der Übertragung nicht vollständig dem Encoder und/oder Decoder bekannt sind. Beispielsweise wird in Dokument [4] ein Verfahren zur binären Repräsentation von XML-Beschreibungen und XML-Dokumenten beschrieben, das Codetabellen für XML-Beschreibungen und XML-Dokumente basierend auf Schemas und Namensräumen bestimmt. Ein Namensraum ist dabei ein Raum in der Dokumentenstruktur, in dem die darin verwendeten Namen mit eindeutigen Bedeutungen bzw. Deklarationen belegt sind, wobei die in einem Namensraum auftretenden Namen in anderen Namensräumen mit anderen Bedeutungen bzw. Deklarationen auftauchen können. Demgegenüber wird über ein Schema wenigstens ein Teil des Namensraums definiert. In dem in [4] beschriebenen Verfahren sind die Codetabellen für die Datentypen, die globalen Elemente und die Ersetzungsgruppen von allen verwendeten Namensräumen abhängig. Demnach müssen die Schemas und Namensräume vor der Erstellung der Codetabellen bekannt sein.

Aus der PCT-Patentanmeldeschrift (WO 02/063775A) ist eine Encoding Methode bekannt, bei der ein Decoder befähigt wird ein strukturiertes Dokument zu decodieren, wobei eine Struktur eines ersten Schemas dem Decoder nicht zur Verfügung steht.

Die PCT-Patentanmeldeschrift (WO 03/001811 A1) beschreibt ein Verfahren und eine Vorrichtung mit dem ein Korrekturcode zusätzlich zu einem bestehenden Namensraum übertragen wird, der die in dem bestehenden Namensraum fehlenden Elemente beschreibt.

Die der Erfindung zugrundeliegende Aufgabe besteht nun darin, eine effiziente Codierung auch dann zu ermöglichen, wenn die Schemas dem Encoder und/oder Decoder nicht vollständig bekannt sind.

Diese Aufgabe wird durch die unabhängigen Patentansprüche gelöst. Die abhängigen Ansprüche beziehen sich auf vorteilhafte Ausgestaltungen der Erfindung.

Bei dem erfindungsgemäßen Verfahren zur Codierung eines strukturierten Dokuments werden eine Vielzahl von Codes mittels eines oder mehrerer Schemas und/oder Namensräume erzeugt. Dabei werden für ein Schema und/oder einen Namensraum jeweils separate, von anderen Schemas und/oder Namensräumen unabhängige Codes für die mittels in den Schemas und/oder Namensräumen definierten und/oder deklarierten Elemente vergeben.

Die Erfindung besteht im Wesentlichen darin, dass Codes in Schemas und/oder Namensräumen separiert vergeben werden. Das hier beschriebene Verfahren ist vorteilhaft, da nun Schemas und/oder Namensräume nach Bedarf auch während der Übertragung von Dokumenten geladen werden können und existierende Codetabellen für andere Namensräume sich hierdurch nicht ändern und somit nicht neu erstellt werden müssen. Ein weiterer Vorteil besteht darin, dass die separaten Codes für Fälle, in denen sehr viele Namensräume importiert werden, weniger Bits zur Adressierung benötigen, als wenn wie in [4] alle Namensräume zusammengefasst werden. Auch in Fällen, in denen ein sehr großer Namensraum importiert wird, können die separaten Codes für die anderen Namensräume mit weniger Bits codiert werden.

Ferner werden bei dem erfindungsgemäßen Verfahren die separaten Codes innerhalb eines gegebenen Namensraums gemäß einem Verfahren vergeben, das folgende Schritte umfasst:
- in einem ersten Schritt werden alle Datentypen eines Namensraums, die von Datentypen anderer Namensräume vererbt worden sind, in der im MPEG-7 Standard definierten Reihenfolge der globalen TypeCodes der jeweiligen Basisdatentypen in einer Liste sortiert, wobei die Basisdatentypen die Datentypen in anderen Namensräumen sind, von denen die sortierten Datentypen vererbt worden sind;
- in einem zweiten Schritt werden jeweils diejenigen Datentypen eines Namensraums, die von einem bestimmten Basisdatentypen eines bestimmten anderen Namensraums vererbt worden sind, lexikographisch sortiert;
- in einem dritten Schritt werden alle Datentypen eines Namensraums, die nicht von einem Datentypen eines anderen Namensraums vererbt worden sind, entsprechend der im MPEG-7 Standard definierten Reihenfolge in die bestehende Liste von Datentypen einsortiert;
- in einem vierten Schritt werden die separaten Codes in der Reihenfolge der Liste an die Datentypen des Namensraums vergeben.

Der Vorteil dabei ist, dass der adressierte Datentyp, insbesondere ein Typecode, schnell gefunden und somit decodiert werden kann. Nach den Regeln in [4] adressiert ein TypeCode einen abgeleiteten Typ relativ zu einem Basistypen. Also definiert der Basistyp einen Unterbaum, in dem alle adressierbaren Datentypen vorhanden sind. Sind in dem Unterbaum nun mehrere Namensräume enthalten, so kann durch die vorteilhafte Nachbarschaftsbeziehung in dem Namensraum ein adressierter Datentyp schnell gefunden werden, da durch einen Vergleich eines gesuchten Datentyps mit zwei benachbarten Datentypen im sortierten Vererbungsbaum festgestellt werden kann, ob sich der gesuchte Datentyp im Unterbaum des Datentypen der zwei benachbarten Datentypen mit dem kleineren binären Code befindet. Auf diese Weise kann der Suchaufwand erheblich verringert werden. Ein weiterer Vorteil dieser Nachbarschaftsbeziehung besteht darin, dass ein Decoder bei einer Codierung der TypeCodes gemäß [4] die Codewortlänge, die sich aus der Anzahl der abgeleiteten Datentypen bestimmt, direkt aus dem Codeabstand der benachbarten Datentypen berechnen kann.

In der Erfindung sind die separaten Codes in Adressbereiche eingeteilt, wobei über die Adressbereiche das Schema und/oder der Namensraum bzw. die Gruppe von Schemas und/oder Namensräumen identifizierbar wird.

In dem erfindungsgemäßen Codierverfahren umfassen die separaten Codes jeweils einen lokalen Code bezüglich des Schemas und/oder des Namensraums und einen Identifikationscode, der das Schema und/oder den Namensraum identifiziert. Ein lokaler Code ist hierbei ein Code, der eindeutig innerhalb des durch den Identifikationscode identifizierten Schemas bzw. Namensraums ist.

Es werden separate Codes für globale Elemente und/oder SubstitutionGroups und/oder Datentypen vergeben. Eine genaue Definition für globale Elemente, SubstitutionGroups und Datentypen findet sich in den XML-Schema-Definitionen, die in den Dokumenten [1], [2] und [3] genau erläutert sind.

Für Datentypen TypeCodes, die in dem Dokument [4] erläutert sind, werden separate Codes in einer bevorzugten Ausführungsform derart erzeugt, dass innerhalb des Vererbungsbaums eines Namensraums der zu einem ersten Datentyp in demselben Namensraum benachbarten Datentyp einen Codeabstand zu dem ersten Datentyp hat, welcher der Anzahl der in diesem Namensraum von dem ersten Datentyp abgeleiteten Datentypen entspricht. Ein Datentyp ist zu einem ersten Datentyp benachbart, wenn der Datentyp vom gleichen Basisdatentyp wie der erste Datentyp abgeleitet worden ist und dem Datentyp unter allen Datentypen, die von diesem Basisdatentypen abgeleitet worden sind, der kleinste Typecode zugewiesen wurde, der größer als der Typecode des ersten Datentyps ist. Bei dieser Ausführungsform werden die Codes für die Datentypen TypeCodes innerhalb des - möglicherweise disjunkten - Vererbungsbaums so vergeben, dass eine vorteilhafte Nachbarschaftsbeziehung in einem gegebenen Namensraum entsteht und erhalten bleibt, auch wenn in diesem Namensraum Unterbäume mit aus anderen Namensräumen abgeleiteten Typen vorkommen.

Neben dem oben beschriebenen erfindungsgemäßen Codierverfahren betrifft die Erfindung ferner ein Verarbeitungsverfahren, mit dem ein strukturiertes Dokument, insbesondere ein XMLbasiertes Dokument codiert und decodiert wird, wobei das Verfahren derart ausgestaltet ist, dass die Decodierung die Decodierung eines bestimmten TypeCodes umfasst, und der Subbaum des Vererbungsbaums des Namensraums, in dem sich der bestimmte Typecode befindet, anhand der Codeabstände zwischen benachbarten Datentypen ermittelt wird.

Neben den oben beschriebenen Verfahren betrifft die Erfindung ferner eine Codiervorrichtung zur Durchführung des erfindungsgemäßen Codierverfahrens. Ferner umfasst die Erfindung eine Codier- und eine Decodiervorrichtung, mit der das erfindungsgemäße durchführbar ist. Verfahren zur Verarbeitung eines Strukturierten Dokuments

Ausführungsbeispiele der Erfindung werden nachfolgend anhand der beigefügten Zeichnungen näher erläutert.

Es zeigen:
- Figur 1: eine Prinzipdarstellung eines erfindungsgemäßen Codier- und Decodiersystems mit Encoder und Decoder;
- Figur 2: eine Darstellung einer beispielhaften XML-SchemaDefinition, in der auch Datentypen aus anderen Namensräumen importiert sowie abgeleitet werden.
- Figur 3: eine Darstellung des Vererbungsbaums der Datentypen für das in Figur 2 gezeigte XML-Schema, einschließlich der Zuordnung der separaten Codes zu in den Namensräumen auftretenden TypeCodes.

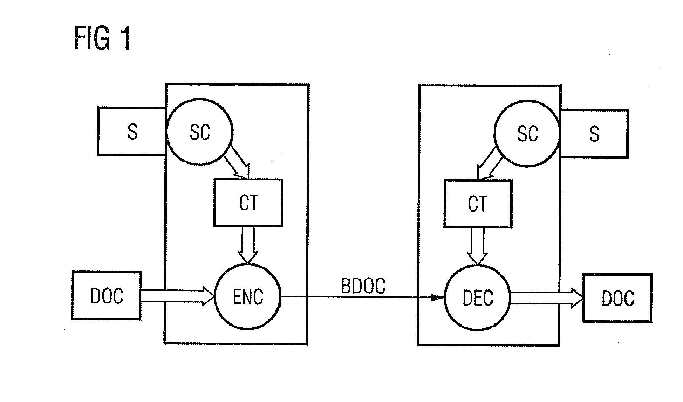

In Figur 1 ist beispielhaft ein Codier- und Decodiersystem mit einem Encoder ENC und einem Decoder DEC dargestellt, mit denen XML-Dokumente DOC codiert bzw. decodiert werden. Sowohl der Encoder als auch der Decoder verfügen beide über ein sogenanntes XML-Schema S, in dem die zur Kommunikation genutzten Elemente und Typen des XML-Dokuments deklariert und definiert sind. Aus dem Schema S werden über entsprechende Schema-Compilationen SC im Encoder und Decoder Code-Tabellen CT erzeugt. Wenn das XML-Dokument DOC codiert wird, werden den Inhalten des XML-Dokuments über die Code-Tabellen binäre Codes zugeordnet. Hierdurch wird eine Binärdarstellung BDOC des Dokuments DOC erzeugt, die mithilfe der Code-Tabelle CT im Decoder wieder decodiert werden kann. Es können hierbei mehrere Schemas verwendet werden, insbesondere können auch Schemas eingesetzt werden, welche auf einem Basisschema beruhen und aus einem weiteren Schema abgeleitet werden.

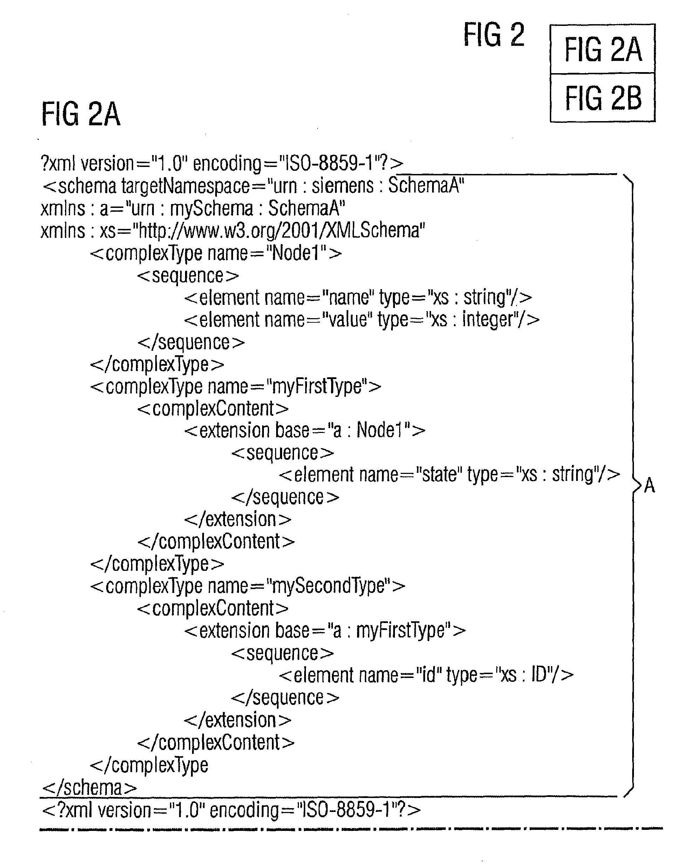

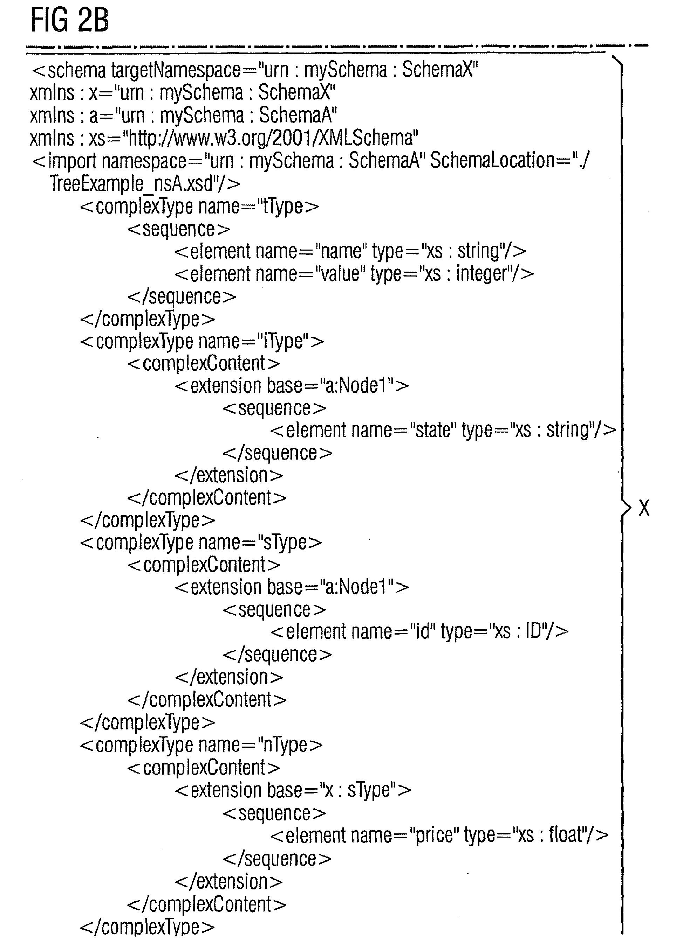

In Figur 2 ist beispielhaft ein Auszug aus einer XML-SchemaDefinition gezeigt. Dem Fachmann sind solche XML-SchemaDefinitionen bekannt, so dass auf den genauen Inhalt des Auszugs der Figur 2 nicht eingegangen wird. Der Auszug enthält zwei Schemadefinitionen, zum einen wird im oberen Teil ein Schema A definiert, wie durch eine geschweifte Klammer angedeutet ist, zum anderen wird im unteren Teil ein Schema X definiert, wie ebenfalls durch eine geschweifte Klammer angedeutet wird. Das Schema X verwendet wiederum Datentypen, die aus dem Schema A importiert worden sind.

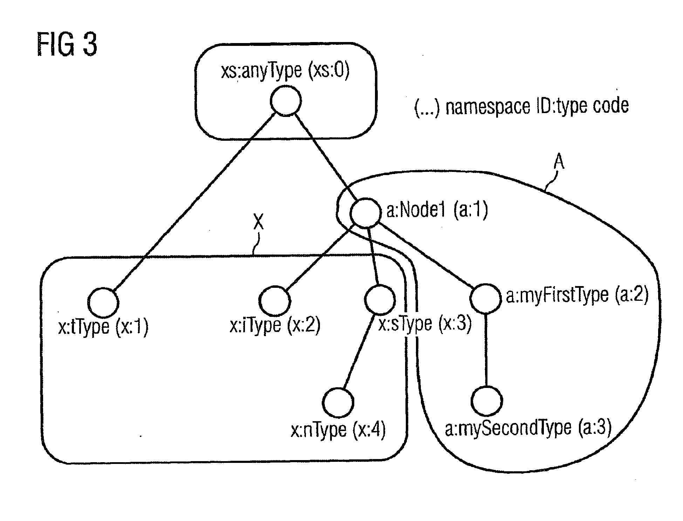

In Figur 3 sind die Vererbungsbeziehungen zwischen den Schemas A und X und deren Datentypen in der Form einer Baumstruktur grafisch dargestellt. Wie der Figur entnommen werden kann, werden beide Schemas A und X aus einem Schema XS vererbt, das den XML-Schema-Namensraum darstellt. Jeder Knoten in dem Datentypbaum repräsentiert einen definierten Datentyp in der Schemadefinition. In dem Schema X werden die Datentypen tType, iType, sType und nType definiert. Demgegenüber werden in dem Schema A die Datentypen Node1, myFirstType und mySecondType definiert. Mit dem erfindungsgemäßen Verfahren werden für das Schema A und X jeweils separate Codes vergeben, die in Figur 3 durch die in Klammern gesetzten Ausdrücke spezifiziert sind. Die in Klammern spezifizierten Ausdrücke enthalten hierbei zunächst die Namensraumidentifikation "namespace ID" und anschließend (durch einen Doppelpunkt getrennt) einen Typecode in der Form eines lokalen Codes. Für die Namensraumspezifikation wird für das Schema X ein x und für das Schema A ein a verwendet. Die TypeCode-Spezifikation wird durch entsprechende Ziffern 1 bis 4 im Namensraum X und 1 bis 3 im Namensraum A gekennzeichnet. Wesentlich ist hierbei, dass die TypeCode-Spezifikationen lokale Codes sind, die innerhalb jedes Namensraums eindeutig sind. Durch eine derartige Zuweisung von lokalen Codes sind nunmehr die Schemas A und X unabhängig voneinander, so dass es für eine Decodierung mittels des einen Schemas nicht mehr notwendig ist, das gesamte andere Schema an den Decodierer zu übertragen.

### Literaturverzeichnis:

[1] http://www.w3.org/TR/2001/REC-xmlschema-0-20010502/
[2] http://www.w3.org/TR/2001/REC-xmlschema-1-20010502/
[3] http://www.w3.org/TR/2001/REC-xmlschema-2-20010502/
[4] ISO/IEC 15938-1 "Multimedia Content Description Interface -Part 1: Systems", Geneva 2002.

## Patentansprüche

1. Verfahren zur Codierung eines strukturierten Dokuments, insbesondere eines XML-basierten Dokuments,
a) bei dem eine Vielzahl von Codes mittels eines oder mehrerer Namensräume erzeugt werden,
b) bei dem für einen Namensraum jeweils separate, von anderen Namensräumen unabhängige Codes für die mittels in den Namensräumen definierten und/oder deklarierten Elemente vergeben werden,
c) bei dem die separaten Codes jeweils einen lokalen Code bezüglich des Namensraums und einen Identifikationscode zur Identifikation des Namensraums umfassen, wobei die separaten Codes in entsprechende Adressbereiche unterteilt sind, wobei die separaten Codes für globale Elemente und/oder SubstitutionGroups und/oder Datentypen erzeugt werden, **dadurch gekennzeichnet, dass** die separaten Codes innerhalb eines gegebenen Namensraums für Datentypen nach folgenden Schritten vergeben werden:
- Sortieren in einer Liste aller Datentypen eines Namensraums, die von Datentypen anderer Namensräume vererbt worden sind, in der im MPEG-7 Standard definierten Reihenfolge der globalen TypeCodes der jeweiligen Basisdatentypen, wobei die Basisdatentypen die Datentypen in anderen Namensräumen sind, von denen die sortierten Datentypen vererbt worden sind;
- Lexikographisches Sortieren jeweils derjenigen Datentypen eines Namensraums, die von einem bestimmten Basisdatentypen eines bestimmten anderen Namensraums vererbt worden sind;
- Einsortieren aller Datentypen eines Namensraums, die nicht von einem Datentypen eines anderen Namensraums vererbt worden sind, entsprechend der im MPEG-7 Standard definierten Reihenfolge in die bestehende Liste von Datentypen;
- Vergabe der separaten Codes in der Liste an die Datentypen des Namensraums.

2. Verfahren nach Anspruch 1, bei dem separate Codes für die jeweiligen Datentypen derart erzeugt werden, dass innerhalb des Vererbungsbaums eines bestimmten Namensraums, der zu einem ersten Datentyp in demselben Namensraum benachbarten jeweiligen Datentyp einen Codeabstand zu dem ersten Datentyp hat, welcher der Anzahl der in dem bestimmten Namensraum von dem ersten Datentyp abgeleiteten Datentypen entspricht.

3. Verfahren zur Verarbeitung eines strukturierten Dokuments, umfassend:
codieren eines strukturierten Dokuments nach Anspruch 2; und
decodieren des strukturierten Documents, wobei die Decodierung die Decodierung eines bestimmten Datentyps umfasst, und der Subbaum eines Vererbungsbaums des Namensraums, in dem sich der bestimmte Code befindet, anhand der Codeabstände zwischen benachbarten Datentypen ermittelt wird.

4. Verfahren nach Anspruch 3, wobei eine Codelänge für jeden der separaten Codes von einer Anzahl der abgeleiteten Datentypen bestimmt wird.

5. Codiervorrichtung, mit Mitteln zum Ausführen eines Codierverfahrens nach Anspruch 1 oder Anspruch 2.

6. Codier- und Decodiervorrichtung mit Mitteln zum Ausführen des Verfahrens nach Anspruch 3.

## Claims

1. Method for coding a structured document, in particular an XML-based document,
a) in which a multiplicity of codes are generated using one or more namespaces,
b) in which, for a namespace, separate codes which are independent of other namespaces are respectively allocated for the elements defined and/or declared in the namespaces,
c) in which the separate codes each comprise a local code for the namespace and an identification code for identifying the namespace, the separate codes being subdivided into corresponding address spaces, and the separate codes being generated for global elements and/or substitution groups and/or data types, **characterized in that** the separate codes within a given namespace for data types are allocated according to the following steps:
- all data types of a namespace which have been inherited from data types of other namespaces are sorted in a list in the order of the global type codes of the respective basic data types which is defined in the MPEG-7 standard, the basic data types being the data types in other namespaces from which the sorted data types have been inherited;
- those data types of a namespace which have been inherited from a particular basic data type of a particular other namespace are each lexicographically sorted;
- all data types of a namespace which have not been inherited from a data type of another namespace are sorted into the existing list of data types according to the order defined in the MPEG-7 standard;
- the separate codes in the list are allocated to the data types of the namespace.

2. Method according to Claim 1, in which separate codes are generated for the respective data types in such a manner that, within the inheritance tree of a particular namespace, the respective data type which is adjacent to a first data type in the same namespace is at a code distance from the first data type corresponding to the number of data types derived from the first data type in the particular namespace.

3. Method for processing a structured document, comprising:
coding a structured document according to Claim 2; and
decoding the structured document, the decoding comprising the decoding of a particular data type, and the subtree of an inheritance tree of the namespace, in which the particular code is located, is determined using the code distances between adjacent data types.

4. Method according to Claim 3, a code length being determined for each of the separate codes of a number of the derived data types.

5. Coding apparatus having means for carrying out a coding method according to Claim 1 or Claim 2.

6. Coding and decoding apparatus having means for carrying out the method according to Claim 3.

## Revendications

1. Procédé de codage d'un document structuré, notamment d'un document à base de XML,
a) dans lequel une pluralité de codes sont générés au moyen d'un ou plusieurs espaces de noms,
b) dans lequel, pour un espace de noms, des codes distincts respectifs indépendants d'autres espaces de noms sont alloués pour des éléments définis et/ou déclarés dans les espaces de noms,
c) dans lequel les codes distincts comprennent respectivement un code local par rapport à l'espace de noms et un code d'identification pour l'identification de l'espace de noms, les codes distincts étant subdivisés en des plages d'adresses correspondantes, les codes distincts étant générés pour des éléments et/ou des groupes de substitution et/ou des types de données globaux, **caractérisé en ce que** les codes distincts sont alloués, dans un espace de noms donné, à des types de données conformément aux étapes suivantes :
- trier dans une liste de tous les types de données d'un espace de noms qui ont été hérités de types de données d'autres espaces de noms, dans l'ordre défini par la norme MPEG-7 du type de code global des types de données de base respectifs, les types de données de base étant les types de données dans d'autres espaces de noms dont ont été hérités les types de données triés ;
- effectuer un tri lexicographique de ceux des types de données respectifs d'un espace de noms qui ont été hérités d'un type de données déterminé d'un autre domaine de noms déterminé ;
- classer dans la liste existante de types de données tous les types de données d'un espace de noms qui n'ont pas été hérités d'un type de données d'un autre espace de noms d'une manière qui correspond à l'ordre défini par la norme MPEG-7 ;
- attribuer les codes distincts contenus dans la liste aux types de données de l'espace de noms.

2. Procédé selon la revendication 1, dans lequel des codes distincts sont générés pour les types de données respectifs de telle manière que dans l'arbre d'héritage d'un espace de noms déterminé, le type de données respectif voisin d'un premier type de données dans le même espace de noms ait une distance de code par rapport au premier type de données qui correspond au nombre des types de données dérivés du premier type de données dans l'espace de noms déterminé.

3. Procédé de traitement d'un document structuré, comprenant :
le codage d'un document structuré selon la revendication 2 ; et
le décodage du document structuré, ce décodage comprenant le décodage d'un type de données déterminé et le sous-arbre d'un arbre d'héritage de l'espace de noms dans lequel se trouve le code déterminé étant obtenu sur la base des distances de codes entre des types de données voisins.

4. Procédé selon la revendication 3, dans lequel une longueur de code est déterminée pour chacun des codes distincts d'un certain nombre des types de données dérivés.

5. Dispositif de codage comprenant des moyens destinés à mettre en oeuvre un procédé de codage selon la revendication 1 ou la revendication 2.

6. Dispositif de codage et de décodage comprenant des moyens destinés à mettre en oeuvre le procédé selon la revendication 3.
